# EUROPÄISCHE PATENTSCHRIFT

(11) **EP 1 690 018 B1**
(45) Veröffentlichungstag und Bekanntmachung des Hinweises auf die Patenterteilung: **08.08.2007**
(21) Anmeldenummer: 04798093.3
(22) Anmeldetag: 26.11.2004
(51) Int. Cl.: F16D 65/12

(54) **MONOBLOCK-BREMSSCHEIBE**
MONOBLOC BRAKE DISK
DISQUE A FREIN MONOBLOC

(30) Priorität: 28.11.2003 DE 10355662
(43) Veröffentlichungstag der Anmeldung: 16.08.2006
(73) Patentinhaber: KNORR-BREMSE Systeme für Schienenfahrzeuge GmbH, 80809 München (DE)
(72) Erfinder: WIRTH, Xaver, 85737 Ismaning (DE)
(74) Vertreter: Mattusch, Gundula
(86) Internationale Anmeldenummer: PCT/EP2004/013437
(87) Internationale Veröffentlichungsnummer: WO 2005/052403

(56) Entgegenhaltungen:
- DE-A1- 1 575 748
- DE-A1- 10 148 681
- GB-A- 2 307 960
- US-A- 4 273 218
- US-A- 5 297 660

## Beschreibung

Die vorliegende Erfindung betrifft eine Monoblock-Bremsscheibe entsprechend dem Oberbegriff der Ansprüche 1 und 6.

Als Monoblock-Bremsscheiben werden solche bezeichnet, bei denen der Reibring unlösbar mit der Nabe verbunden ist. Bekannt sind beispielsweise Topfscheiben, Verbundgußscheiben oder Speichenausführungen, bei denen der Reibring über Speichen mit der Nabe verbunden ist.

Allen genannten Bremsscheiben gemeinsam ist, daß aufgrund einer betriebsbedingten Reibringerwärmung erhebliche Spannungen im Bereich der Nabenanbindung entstehen, die zu Materialrissen führen können.

Die Aufnahme bzw. Weiterleitung der aus der Bremsenergie resultierenden Reibungswärme ist werkstoffabhängig und durch die bislang bekannte Formgebung der Bauteile begrenzt.

Die eingesetzten Monoblock-Bremsscheiben, beispielsweise aus Kugelgraphitguß mit Radial-Vollspeichen, sind aufgrund der genannten Reibwännebelastung nur bis zu einer Reisezugwagengeschwindigkeit von 160 km/h zugelassen.

Bei größeren Geschwindigkeiten erhöhen sich die Spannungen in den Speichen erheblich, da die Temperaturen und damit die Ausdehnung des Reibringes proportional zur Bremsenergie ansteigt.

So würden bei einer Geschwindigkeit von 200 km/h die Spannungen um 56 % erhöht, so daß es eventuell zu einem Anreißen der Speichen kommen könnte.

Für höhere Fahrzeuggeschwindigkeiten kommen daher Bremsscheiben zum Einsatz, die konstruktiv aufwendiger gestaltet und dadurch nur mit höheren Fertigungskosten herstellbar sind.

Aus der DE 1 575 748 A ist eine gattungsgemäße Monoblock-Bremsscheibe bekannt, bei der sich die Speichenarme konzentrisch von einem mit der Nabe verbundenen Stück erstrecken und mit Rippen des Reibringes verbunden sind.

Aufgrund der beidseitigen konzentrischen Erstreckung ist das Platzangebot für anzuordnende Speichen eingeschränkt, was naturgemäß Einfluss auf die Belastungsfähigkeit der Monoblock-Bremsscheibe hat, so dass ihre Einsatzmöglichkeit insgesamt beschränkt ist.

Die vorliegende Erfindung liegt daher die Aufgabe zugrunde, eine Monoblock-Bremsscheibe der gattungsgemäßen Art so weiter zu entwickeln, daß ihre Belastungsfähigkeit erhöht und ihr Einsatz für höhere Fahrzeuggeschwindigkeiten möglich ist.

Diese Aufgabe wird durch eine Monoblock-Bremsscheibe gelöst, die die Merkmale des Anspruchs 1 oder des Anspruchs 6 aufweist.

Danach ist jedenfalls ein Teil, vorzugsweise jede der Speichen, als Doppelspeiche mit zwei Speichenarmen ausgebildet, die insbesondere gekrümmt ausgebildet sind.

Mit geringem Aufwand ist nun eine Monoblock-Bremsscheibe geschaffen, die gegenüber der bekannten wesentlich stärker belastbar ist, insbesondere hinsichtlich der Wärmebeaufschlagung, so daß die Monoblock-Bremsscheibe nun auch in Schienenfahrzeugen eingesetzt werden kann, bei denen bisher nur hochpreisigere Produkte zum Einsatz kamen.

So haben Berechnungen ergeben, daß durch im Sinne der Erfindung eingesetzte Doppelspeichen, die beidseitig einer Längsachse kreisbogenförmig oder annährend kreisbogenförmig gekrümmte Speichenarme aufweisen, gegenüber einer Vollspeiche, bei gleichem konstanten Querschnitt, die rechnerisch zulässige Dehnung der Doppelspeiche um 87 % höher ist als die der Vollspeiche.
Durch eine Spannungsoptimierung, d. h., durch eine Veränderung des Querschnitts über die Gesamtlänge jedes Speichenarmes der Doppelspeiche ist es möglich, die Dehnungsgrenze der Speichen einer Monoblock-Bremsscheibe um die bereits zum Stand der Technik genannten 56 % zu erhöhen, so daß Monoblock-Bremsscheiben, die bislang nur für eine Fahrzeuggeschwindigkeit bis 160 km/h eingesetzt werden konnten, nun bis zu einer Geschwindigkeit von 200 km/h einsetzbar sind.

Unter Beachtung einer zulässigen Grenzspannung nimmt die Dehnfähigkeit der gekrümmten Speichenarme zu, wenn der Krümmungsradius bei einer kreisbogenförmigen Krümmung größer wird und das Widerstandsmoment sich über die Speichenlänge derart ändert, daß die Biegespannung entlang der Speiche annähernd konstant bleibt. Dadurch sind unterschiedliche Krümmungsformen möglich bzw. sinnvoll.

Hier ist zunächst die bereits angesprochene kreisbogenförmige, beidseitig konvexe Krümmung mit großem Radius zu nennen, bei der die Anbindung der Speiche am Reibring weit außerhalb des Innendurchmessers des Reibringes liegt, vorzugsweise mehr als 50 %, bezogen auf die radiale Reibringbreite, mindestens jedoch 30 %.

Alternativ können die beiden Speichenarme gemeinsam ein Oval oder annährend ein Oval beschreiben, das in seiner Breitenausdehnung relativ schmal gehalten sein kann, so daß die Anzahl der Doppelspeichen problemlos zu erhöhen ist. Entsprechend den Erfordernissen können drei bis acht, im Bedarfsfall auch mehr Doppelspeichen vorgesehen sein.

Weiterhin besteht die Möglichkeit, die Speichenarme in Teilbereichen zu verstärken bzw. lediglich abschnittsweise gekrümmt auszubilden, um den auftretenden Belastungen genau zu entsprechen.

Weitere vorteilhafte Ausbildungen der Erfindung sind in den Unteransprüchen gekennzeichnet.

Ausführungsbeispiele der Erfindungen werden nachfolgend anhand der beigefügten Zeichnungen beschrieben.

Es zeigen:
- Figur 1: einen Teilausschnitt einer erfindungsgemäßen Monoblock-Bremsscheibe in einer geschnittenen Seitenansicht,
- Figur 2: die Monoblock-Bremsscheibe nach Figur 1 in einem Querschnitt,
- Figur 3: ein weiteres Ausführungsbeispiel einer Monoblock-Bremsscheibe in einem Einzelausschnitt in einer geschnittenen Seitenansicht dargestellt,
- Figuren 4-6: jeweils weitere Ausführungsbeispiele der Erfindungen.

In den Figuren ist eine Monoblock-Bremsscheibe, insbesondere für Scheibenbremsen von Schienenfahrzeugen dargestellt, mit einem Reibring 1, der durch Speichen 3 unlösbar an eine Nabe 2 angeschlossen ist. Dabei können der Reibring 1 und die Nabe 2 einstückig ausgebildet sein.

Der Reibring 1 besteht aus zwei parallel und mit Abstand zueinander verlaufenden ringförmigen Reibflächen 7, die durch radiale Stege 5 miteinander verbunden sind.

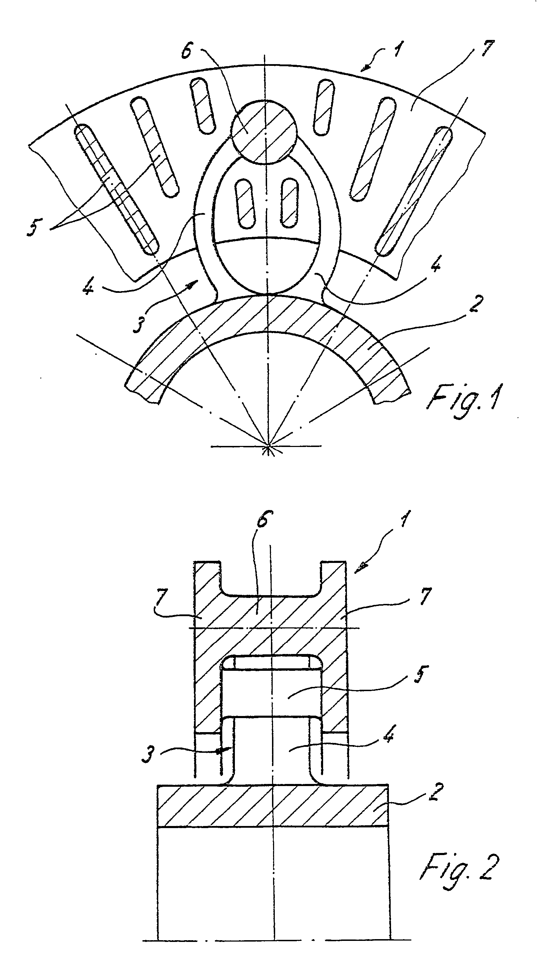

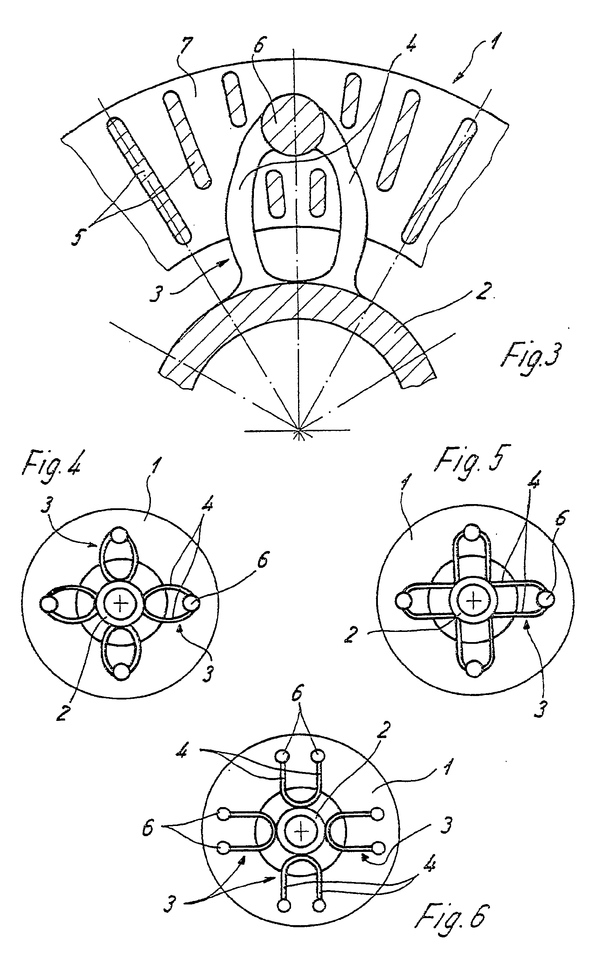

Mehrere Speichen 3, bei den in den Figuren 4-6 gezeigten Ausführungsbeispiel vier, sind gleichmäßig über den Umfang verteilt. Jede Speiche 3 ist als eine zumindest bereichsweise in ihrer Längserstreckung gekrümmte Doppelspeiche ausgebildet mit zwei spiegelsymmetrischen Speichenarmen 4, die in den Ausführungsbeispielen der Figuren 1-4 konvex gekrümmt sind.

Auf ihrer der Nabe 2 abgewandten Endseite sind die Speichenarme 4 an einem Anschlußbolzen 6 befestigt, der wiederum mit dem Reibring 1 verbunden ist.

Bei dem in der Figur 1 gezeigten Beispiel sind die beiden Speichenarme 4 so gekrümmt, daß sie etwa ein Oval einschließen. Der Querschnitt der Speichenarme 4 ist über die hauptsächliche Erstreckung gleich ausgebildet, sowohl in Form wie auch in Abmaß.

Demgegenüber ist der Querschnitt der beiden gegenüber liegenden Speichenarme 4 bei dem in der Figur 3 gezeigten Ausführungsbeispiel unterschiedlich und entsprechend den auftretenden Maximalbelastungen optimiert, d. h., die Speichenarme 4 weisen einen spannungsminimierten Querschnittsverlauf auf, mit einer gegenüber den sich beidseitig anschließenden Endbereichen sich verdickenden Zone.

Ebenso wie die Monoblock-Bremsscheibe gemäß Figur 1 bilden die Speichenarme 4 nach Figur 3 ein Oval, durch das die Breite der Doppelspeiche 3 insgesamt relativ schmal gehalten werden kann, so daß sich die Anzahl der Doppelspeichen 3 problemlos erhöhen läßt.

In den Figuren 4-6 ist jeweils schematisch eine Monoblock-Bremsscheibe dargestellt, deren vier Doppelspeichen 3 sich unter gleichem Winkelabstand zueinander angeordnet radial erstrecken.

Die Monoblock-Bremsscheibe in Figur 4 entspricht hinsichtlich der Ausbildung ihrer Speichen 3 der in den Figuren 1 und 3 dargestellten.

Die Speichen 3 der Monoblock-Bremsscheibe nach Figur 5 sind lediglich abschnittsweise gekrümmt, im vorliegenden Fall in dem dem jeweiligen Anschlußbolzen 6 zugeordneten Endbereich.

Eine bereichsweise Krümmung der Speichen 3 ist ebenfalls in der Figur 6 zu erkennen in der ein Ausführungsbeispiel gemäß dem nebengeordneten Anspruch 6 dargestellt ist. Hierbei ergeben die beiden Speichenarme 4 eine etwa U-förmige Speiche 3, deren gekrümmter Verbindungsbereich an die Nabe 2 angeschlossen ist, während jedes insoweit freie Ende des jeweiligen Speichenarmes 4 über einen eigenen Anschlußbolzen 6 mit dem Reibring 1 verbunden ist, so daß jede Speiche 3 zweifach daran angebunden ist.

Wie in den Darstellungen aller Ausführungsbeispiele zu erkennen ist, ist jede als Doppelspeiche ausgebildete Speiche 3, bezogen auf ihre Längsachse, spiegelsymmetrisch ausgebildet.

## Patentansprüche

1. Monoblock-Bremsscheibe, insbesondere für Scheibenbremsen von Schienenfahrzeugen, mit einem Reibring (1), der unlösbar über jeweils als Doppelspeichen mit zwei Speichenarmen (4) ausgebildete Speichen (3) mit einer Nabe (2) verbunden ist, **dadurch gekennzeichnet, dass** die zwei Speichenarme (4) jeder Doppelspeiche in ihrer Längserstreckung in Umfangsrichtung gekrümmt und in einem gemeinsamen Anbindungsbereich am Reibring (1) befestigt sind.

2. Monoblock-Bremsscheibe nach einem der vorhergehenden Ansprüche, **dadurch gekennzeichnet, dass** die beiden Speichenarme (4) jeweils kreisbogenförmig oder nahezu kreisbogenförmig ausgebildet sind.

3. Monoblock-Bremsscheibe nach einem der vorhergehenden Ansprüche, **dadurch gekennzeichnet, dass** die einander gegenüber liegenden, konvex ausgebildeten Speichenarme (4) die Form eines Ovals oder nahezu eines Ovals einschließen.

4. Monoblock-Bremsscheibe nach einem der vorhergehenden Ansprüche, **dadurch gekennzeichnet, dass** jede Speiche (3) ausschließlich im Anbindungsbereich an den Reibring (1) gekrümmt ist.

5. Monoblock-Bremsscheibe nach einem der vorgehenden Ansprüche, **dadurch gekennzeichnet, dass** die Speichenarme (4) über einen gemeinsamen Anschlussbolzen (6) mit dem Reibring (1) verbunden sind.

6. Monoblock-Bremsscheibe, insbesondere für Scheibenbremsen von Schienenfahrzeugen, mit einem Reibring (1), der unlösbar über jeweils als Doppelspeichen mit zwei Speichenarmen (4) ausgebildete Speichen (3) mit einer Nabe (2) verbunden ist, **dadurch gekennzeichnet, dass** die zwei Speichenarme (4) jeder Doppelspeiche in ihrer Längserstreckung in Umfangsrichtung ausschließlich im Anbindungsbereich an die Nabe (2) gekrümmt sind, wobei die jeweilige Speiche (3) U-förmig ausgebildet ist und jeder Speichenarm (4) über einen Anschlussbolzen (6) mit dem Reibring verbunden ist.

7. Monoblock-Bremsscheibe nach einem oder mehreren der vorhergehenden Ansprüche, **dadurch gekennzeichnet, dass** die beiden Speichenarme (4), jeweils kreisbogenförmig oder annährend kreisbogenförmig ausgebildet und mit ihren konkaven Seiten einander zugewandt sind.

8. Monoblock-Bremsscheibe nach einem oder mehreren der vorhergehenden Ansprüche, **dadurch gekennzeichnet, dass** der Querschnitt des einen Speichenarmes (4) an jedem Punkt der Längserstreckung sowohl hinsichtlich der Form wie auch hinsichtlich des Abmaßes gleich dem des anderen Speichenarmes (4) ist.

9. Monoblock-Bremsscheibe nach einem oder mehreren der vorhergehenden Ansprüche, **dadurch gekennzeichnet, dass** die Form und/oder der Querschnitt jedes Speichenarmes (4) über die gesamte Länge oder nahezu die gesamte Länge gleich ist

10. Monoblock-Bremsscheibe nach einem oder mehreren der vorhergehenden Ansprüche, **dadurch gekennzeichnet, dass** die Form und/oder der Querschnitt jedes Speicherarmes (4) über die gesamte Länge oder nahezu die gesamte Länge unterschiedlich dimensioniert oder geformt ist.

11. Monoblock-Bremsscheibe nach einem oder mehreren der vorhergehenden Ansprüche, **dadurch gekennzeichnet, dass** die Speichenarme (4) über einen gemeinsamen Anschlussbolzen (6) mit dem Reibring (1) verbunden sind.

12. Monoblock-Bremsscheibe nach einem oder mehreren der vorhergehenden Ansprüche, **dadurch gekennzeichnet, dass** die Nabe (2) und der Reibring (1) einstückig ausgebildet sind.

13. Monoblock-Bremsscheibe nach einem oder mehreren der vorhergehenden Ansprüche, **dadurch gekennzeichnet, dass** die Anschlussbolzen (6) in einem Bereich am Reibring (1) angeordnet sind, der mindestens 30 %, vorzugsweise mehr als 50 % der radialen Breite des Reibringes (1) außerhalb dessen Innendurchmesser liegt.

## Claims

1. Monobloc brake disc, in particular for disc brakes of rail vehicles, comprising a friction ring (1) that is permanently connected to a hub (2) via spokes (3) configured each as dual spokes having two spoke arms (4), **characterised in that** said two spoke arms (4) of each dual spoke are curved along the circumferential direction in their longitudinal extension and are fastened in a common connection zone to said friction ring (1).

2. Monobloc brake disc according to any of the preceding Claims, **characterised in that** either one of said two spoke arms (4) presents the shape of a circular arch or approximately a circular arch.

3. Monobloc brake disc according to any of the preceding Claims, **characterised in that** said spoke arms (4) having a convex configuration and located opposite to each other enclose the shape of an oval or almost an oval.

4. Monobloc brake disc according to any of the preceding Claims, **characterised in that** each spoke (3) is curved exclusively in the zone of connection to said friction ring (1).

5. Monobloc brake disc according to any of the preceding Claims, **characterised in that** said spoke arms (4) are connected to said friction ring (1) via a common connecting bolt (6).

6. Monobloc brake disc in particular for disc brakes of rail vehicles, comprising a friction ring (1) that is permanently connected to a hub (2) via spokes (3) configured each as dual spokes having two spoke arms (4), **characterised in that** said two spoke arms (4) of each dual spoke are curved along the circumferential direction in their longitudinal extension exclusively in the zone of connection to said hub (2), with the respective spoke (3) having a U-shaped configuration and with each spoke arm (4) being connected to said friction ring via a connecting bolt (6).

7. Monobloc brake disc according to one or several of the preceding Claims, **characterised in that** either one of said two spoke arms (4) has a configuration in the shape of a circular arch or approximately a circular arch and that said spoke arms face each other by their concave sides.

8. Monobloc brake disc according to one or several of the preceding Claims, **characterised in that** the cross-sectional area of the first spoke arm (4) equals the cross-sectional area of the other spoke arm (4) both in shape and in dimension at each point along the longitudinal extension.

9. Monobloc brake disc according to one or several of the preceding Claims, **characterised in that** the shape and/or the cross-sectional area of each spoke arm (4) is the same over the entire length or almost the entire length.

10. Monobloc brake disc according to one or several of the preceding Claims, **characterised in that** the shape and/or the cross-sectional area of each spoke arm (4) is dimensioned or shaped in a different manner over the entire length or almost the entire length.

11. Monobloc brake disc according to one or several of the preceding Claims, **characterised in that** said spoke arms (4) are connected to said friction ring (1) via a common connecting bolt.

12. Monobloc brake disc according to one or several of the preceding Claims, **characterised in that** said hub (2) and said friction ring (1) present an integral configuration.

13. Monobloc brake disc according to one or several of the preceding Claims, **characterised in that** said connecting bolts (6) are disposed in a region on said friction ring (1), which is located outside the inner diameter of said friction ring (1) by at least 30 %, preferably more than 50 %, of the radial width of said friction ring (1).

## Revendications

1. Disque de frein monobloc, notamment pour des freins à disque de véhicules sur rails, comprenant un anneau de friction (1) qui est relié de manière inamovible à un moyeu (2) par l'intermédiaire de rayons (3) réalisés chacun sous la forme d'un rayon double à deux bras de rayon (4), **caractérisé en** cc que les deux bras de rayon (4) de chaque rayon double sont, sur leur étendue longitudinale, courbés dans la direction périphérique, et sont fixés dans une zone d'attachement commune sur l'anneau de friction (1).

2. Disque de frein monobloc selon la revendication précédente, **caractérisé en ce que** les deux bras de rayon (4) sont réalisés chacun en forme d'arc de cercle ou pratiquement en forme d'arc de cercle.

3. Disque de frein monobloc selon l'une des revendications précédentes, **caractérisé en ce que** les bras de rayon (4) de configuration convexe, placés de manière opposée l'un à l'autre, incluant une forme ovale ou pratiquement ovale.

4. Disque de frein monobloc selon l'une des revendications précédentes, **caractérisé en ce que** chaque rayon (3) est courbé exclusivement dans la zone d'attachement à l'anneau de friction (1).

5. Disque de frein monobloc selon l'une des revendications précédentes, **caractérisé en ce que** les bras de rayon (4) sont reliés à l'anneau de friction (1), par l'intermédiaire d'une broche de raccordement (6) commune.

6. Disque de frein monobloc, notamment pour des freins à disque de véhicules sur rails, comprenant un anneau de friction (1) qui est relié de manière inamovible à un moyeu (2) par l'intermédiaire de rayons (3) réalisés chacun sous la forme d'un rayon double à deux bras de rayon (4), **caractérisé en ce que** les deux bras de rayon (4) de chaque rayon double sont, sur leur étendue longitudinale, courbés dans la direction périphérique exclusivement dans la zone d'attachement au moyeu (2), le rayon (3) considéré étant réalisé en forme de U et chaque bras de rayon (4) étant reliés à l'anneau de friction par l'intermédiaire d'une broche de raccordement (6).

7. Disque de frein monobloc selon l'une ou plusieurs des revendications précédentes, **caractérisé en ce que** les deux bras de rayon (4) sont réalisés chacun en forme d'arc de cercle ou pratiquement en forme d'arc de cercle, et ont leurs côtés concaves dirigés l'un vers l'autre.

8. Disque de frein monobloc selon l'une ou plusieurs des revendications précédentes, **caractérisé en ce que** la section transversale d'un bras de rayon (4) est, en chaque point de l'étendue longitudinale, identique, aussi bien quant à la forme que quant à la dimension, à celle de l'autre bras de rayon (4).

9. Disque de frein monobloc selon l'une ou plusieurs des revendications précédentes, **caractérisé en ce que** la forme et/ou la section transversale de chaque bras de rayon (4) est identique sur la totalité de la longueur ou pratiquement la totalité de la longueur.

10. Disque de frein monobloc selon l'une ou plusieurs des revendications précédentes, **caractérisé en ce que** la forme et/ou la section transversale de chaque bras de rayon (4) est de dimension ou de forme différente sur la totalité de la longueur ou pratiquement la totalité de la longueur.

11. Disque de frein monobloc selon l'une ou plusieurs des revendications précédentes, **caractérisé en ce que** les bras de rayon (4) sont reliés à l'anneau de friction (1), par l'intermédiaire d'une broche de raccordement (6) commune.

12. Disque de frein monobloc selon l'une ou plusieurs des revendications précédentes, **caractérisé en ce que** le moyeu (2) et l'anneau de friction (1) sont réalisés d'une seule pièce.

13. Disque de frein monobloc selon l'une ou plusieurs des revendications précédentes, **caractérisé en ce que** les broches de raccordement (6) sont agencées dans une zone sur l'anneau de friction (1), qui se situe à l'extérieur de son diamètre intérieur, d'au moins 30%, de préférence de plus de 50% de la largeur radiale de l'anneau de friction (1).
